# EUROPÄISCHE PATENTSCHRIFT

(11) **EP 3 455 117 B1**
(45) Veröffentlichungstag und Bekanntmachung des Hinweises auf die Patenterteilung: **11.11.2020**
(21) Anmeldenummer: 17722733.7
(22) Anmeldetag: 08.05.2017
(51) Int. Cl.: B61C 13/04

(54) **TRANSPORTSYSTEM UND WAGEN FÜR EIN TRANSPORTSYSTEM**
TRANSPORT SYSTEM AND CAR FOR A TRANSPORT SYSTEM
SYSTÈME DE TRANSPORT ET CHARIOT POUR UN SYSTÈME DE TRANSPORT

(30) Priorität: 10.05.2016 DE 102016207988
(43) Veröffentlichungstag der Anmeldung: 20.03.2019
(73) Patentinhaber: Montratec GmbH, 78078 Niedereschach (DE)
(72) Erfinder: WORM, Sven, 72280 Dornstetten (DE); MÜLLER, Sebastian, 78628 Zepfenhan (DE); FRÖHER, Andreas, 78655 Dunningen (DE)
(74) Vertreter: Patentanwälte Ruff, Wilhelm, Beier, Dauster & Partner mbB
(86) Internationale Anmeldenummer: PCT/EP2017/060927
(87) Internationale Veröffentlichungsnummer: WO 2017/194472

(56) Entgegenhaltungen:
- CH-A- 445 319
- DE-C- 518 644
- FR-A5- 2 097 413
- FR-A5- 2 178 559
- GB-A- 338 782
- US-A1- 2010 294 848
- US-B1- 6 324 994

## Beschreibung

Die Erfindung betrifft ein Transportsystem für Produktions-, Montage- und/oder Logistikprozesse umfassend mindestens eine Schiene und mindestens ein fahrerloses Schienenfahrzeug, welches entlang der mindestens einen Schiene für einen Materialtransport bewegbar ist.

Ein derartiges Transportsystem ist beispielsweise aus EP 0 728 647 A1 bekannt, wobei als fahrerloses Schienenfahrzeug ein Laufwagen mit an der Schiene anliegenden Laufrollen vorgesehen ist. Das Transportsystem ist für einen zuverlässigen Materialtransport entlang durch die Schienen vorgegebener Strecken in einer Vielzahl an Produktions-, Montage- und/oder Logistikprozesse vorteilhaft einsetzbar.

FR 2 178 559 A5 zeigt ein Transportsystem, bei welchen Wagen mittels eines Seilantriebs bewegt werden, wobei die Wagen wahlweise mittels Rollen auf einem Untergrund oder hängend geführt sind. FR 2 097 782 A5, GB 338 782 A und DE 518 644 C zeigen ebenfalls Wagen, welche wahlweise hängend oder entlang eines Untergrunds bewegbar sind.

Aus CH 445 319 sind Fahrzeuge bekannt, welche neben den Rädern für eine Bewegung entlang der Straße, zusätzliche Räder aufweist, welche eine Bewegung entlang oberhalb des Fahrzeugs angeordneter Schienen ermöglicht. Als Hybridfahrzeuge bezeichnete Fahrzeuge, welche wahlweise schienengebunden oder nicht schienengebunden bewegbar sind, sind auch aus US 6,324,994 und US 2010/0294848 A1 bekannt.

### AUFGABE UND LÖSUNG

Es ist die Aufgabe der vorliegenden Erfindung, ein Transportsystem der eingangs genannten Art mit einer erhöhten Flexibilität zu schaffen.

Diese Aufgabe wird gelöst durch die Gegenstände mit den Merkmalen der Ansprüche 1 und 6. Vorteilhafte Ausgestaltungen ergeben sich aus den Unteransprüchen.

Gemäß einem ersten Aspekt wird ein Transportsystem für Produktions-, Montage- und/oder Logistikprozesse geschaffen, umfassend mindestens eine Schiene, mindestens ein fahrerloses Schienenfahrzeug, welches entlang der mindestens einen Schiene für einen Materialtransport bewegbar ist, sowie mindestens ein fahrerloses Transportfahrzeug für einen nicht schienengebundenen Materialtransport, das Bewegungselemente für eine nicht schienengebundene Bewegung aufweist.

Erfindungsgemäß wird ein schienengebundenes Transportsystem mit einem nicht schienengebundenen, fahrerlosen Transportfahrzeug kombiniert. Als fahrerloses Fahrzeug wird im Zusammenhang mit der Anmeldung ein Fahrzeug mit eigenem Fahrantrieb bezeichnet, welches sich selbsttätig zwischen zwei oder mehr Stationen eines Produktions-, Montage- und/oder Logistikprozesses bewegt. Ein fahrerloses Fahrzeug, das Bewegungselemente für eine schienengebundene Bewegung aufweist, wird als fahrerloses Schienenfahrzeug bezeichnet. Ein fahrerloses Transportfahrzeug, das Bewegungselemente für eine nicht schienengebundene Bewegung aufweist, wird im Zusammenhang mit der Anmeldung auch als nicht schienengebundenes, fahrerloses Transportfahrzeug bezeichnet. Eine abzufahrende Strecke des nicht schienengebundenen, fahrerlosen Transportfahrzeugs kann je nach Anwendungsfall im Vorfeld festgelegt oder durch das Fahrzeug situativ gewählt werden.

Das Schienenfahrzeug und zugehörige Schienen sind vorzugsweise gestaltet wie in DE 195 13 095 A1, EP 0 728 647 A1, DE 198 37 975 A1, DE 101 21 436 A1 und/oder WO 2005/118365 A1 beschrieben, auf deren Offenbarung hiermit vollumfänglich Bezug genommen wird. Insbesondere umfasst das Transportsystem vorzugsweise mindestens ein als Laufwagen gestaltetes Schienenfahrzeug, welches Laufrollen zum Verfahren entlang der Schiene aufweist. Die Laufrollen sind in vorteilhaften Ausgestaltungen um vertikale Achsen drehbar gelagert. Das Schienenfahrzeug oder die Schienenfahrzeuge wird/werden in vorteilhaften Ausgestaltungen mittels eines an dem Fahrzeug vorgesehenen Elektroantriebs betrieben. Für eine Energieversorgung des Schienenfahrzeugs sind an dem Schienenfahrzeug in vorteilhaften Ausgestaltungen Stromabnehmer vorgesehen, welche mit an der Schiene vorgesehenen Stromschienen zusammenwirken, wie beispielsweise in DE 198 37 975 A1 beschrieben. Alternativ ist ein Antrieb mittels Brennstoffzelle denkbar, wie beispielsweise in WO 2005/118365 A1 beschrieben.

Das fahrerlose Transportfahrzeug ist in einer Ausgestaltung gleitend oder schwebend über einen Untergrund bewegbar. In vorteilhaften Ausgestaltungen weist das mindestens eine fahrerlose Transportfahrzeug als Bewegungselemente Laufrollen zum Verfahren über einen Untergrund auf. Die Laufrollen zum Verfahren über einen Untergrund sind um im Wesentlichen horizontale Drehachsen drehbar gelagert. Dabei sind je nach Gestaltung des Transportfahrzeugs die Laufrollen an einer oder zwei angetriebenen Achsen vorgesehen oder direkt antreibbar.

Das in dem Transportsystem eingesetzte nicht schienengebundene, fahrerlose Transportfahrzeug weist vorzugsweise einen abgasfreien Antrieb, beispielsweise umfassend eine Brennstoffzelle oder einen Federspeicherantrieb, auf. In vorteilhaften Ausgestaltungen weist das mindestens eine fahrerlose Transportfahrzeug als Fahrantrieb einen Elektroantrieb auf. Insbesondere ist in einer Ausgestaltung vorgesehen, dass das Schienenfahrzeug und/oder das nicht schienengebundene Fahrzeug einen Elektroantrieb aufweisen, wobei das Fahrzeug einen oder mehrere Energiespeicher für elektrische Energie zur Versorgung des Elektroantriebs mit sich führt. Bei dem Energiespeicher handelt es sich vorzugsweise um einen als Akkumulator oder kurz Akku bezeichneten wiederaufladbaren Speicher für elektrische Energie.

In vorteilhaften Ausgestaltungen sind Überführungselemente vorgesehen, um ein Schienenfahrzeug des Transportsystems von der Schiene auf das fahrerlose Transportfahrzeug selbsttätig zu überführen und/oder um ein mittels eines Schienenfahrzeugs transportiertes Fördergut auf das fahrerlose Transportfahrzeug selbsttätig zu überführen.

Zu diesem Zweck weist das mindestens eine fahrerlose Transportfahrzeug ein an die mindestens eine Schiene ansetzbares Schienenstück auf. Das an die Schiene ansetzbare Schienenstück und die mindestens eine Schiene weisen ein zumindest im Wesentlichen baugleiches Schienenprofil auf, sodass das entlang der Schiene verfahrbare Schienenfahrzeug von der Schiene auf das daran angesetzte Schienenstück oder von dem Schienenstück auf die Schiene bewegbar ist. Das Schienenprofil des Schienenstücks weist vorzugsweise zwei A-förmig angeordnete, geneigte Flächen auf, entlang welcher um vertikale Drehachsen rotierende Laufrollen eines Schienenfahrzeugs gemäß EP 0 728 647 A1 verfahrbar sind. Insbesondere weist das Schienenprofil des Schienenstücks in vorteilhaften Ausgestaltungen einen Abschnitt mit einem zumindest im Wesentlichen rautenförmigen Querschnitt auf, wobei zwei Laufrollen und zwei parallel zu den Laufrollen angeordnete Stützrollen entlang der vier Flächen des rautenförmigen Querschnitts abrollen.

Um ein Ansetzen des Schienenstücks an unterschiedliche Schienen des Transportsystems zu ermöglichen, welche in unterschiedlichen, in horizontaler Richtung beabstandeten Ebenen verlaufen und/oder um eine Bearbeitung eines mittels des fahrerlosen Transportfahrzeugs transportierten Förderguts auf unterschiedlichen Ebenen zu ermöglichen, ist das Schienenstück vorzugsweise bezüglich eines Gestells in vertikaler Richtung verstellbar gelagert. Beispielsweise ist das Schienenstück in einer Ausgestaltung mittels einer oder mehrerer Teleskopstangen an einem Gestell des fahrerlosen Transportfahrzeugs gelagert.

Gemäß einem zweiten Aspekt wird die Verwendung eines fahrerlosen Transportfahrzeugs, das Bewegungselemente für eine nicht schienengebundene Bewegung aufweist, für einen nicht schienengebundenen Materialtransport in einem Transportsystem umfassend mindestens eine Schiene, entlang welcher fahrerlose Schienenfahrzeuge für einen Materialtransport bewegbar sind, geschaffen. Insbesondere wird die Verwendung eines Bewegungselements für eine nicht schienengebundene Bewegung aufweisenden, fahrerlosen Transportfahrzeugs in einem aus DE 195 13 095 A1, EP 0 728 647 A1, DE 198 37 975 A1, DE 101 21 436 A1 und/oder WO 2005/118365 A1 bekannten System geschaffen. Das Transportfahrzeug weist dabei ein Schienenstück zur Übernahme eines Schienenfahrzeugs auf.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen schematisch:
- Fig. 1: Transportsystem für Produktions-, Montage- und/oder Logistikprozesse;
- Fig. 2: ein nicht zur Erfindung gehörendes Fahrzeug, welches sowohl als fahrerloses Transportfahrzeug für einen nicht schienengebundenen Materialtransport als auch als Schienenfahrzeug in dem Transportsystem gemäß Fig. 1 nutzbar ist in einer Seitenansicht,
- Fig. 3: das Fahrzeug gemäß Fig. 2 in einer Vorderansicht;
- Fig. 4: das Fahrzeug gemäß Fig. 2 beim Umsetzen zwischen einer Schiene und einem Untergrund;
- Fig. 5: ein erfindungsgemäßes fahrerloses Transportfahrzeug für einen nicht schienengebundenen Materialtransport in dem Transportsystem gemäß Fig. 1 mit einem Schienenstück,
- Fig. 6: das fahrerlose Transportfahrzeug gemäß Fig. 5 beim Umsetzen eines Schienenfahrzeugs zwischen einer Schiene und dem fahrerlosen Transportfahrzeug;
- Fig. 7: ein nicht zur Erfindung gehörendes fahrerloses Transportfahrzeug für einen nicht schienengebundenen Materialtransport in dem Transportsystem gemäß Fig. 1 mit einem Fördermittel, und
- Fig. 8: das fahrerlose Transportfahrzeug gemäß Fig. 7 beim Umsetzen eines Förderguts zwischen einem Schienenfahrzeug und dem fahrerlosen Transportfahrzeug.

### DETAILLIERTE BESCHREIBUNG DER AUSFÜHRUNGSBEISPIELE

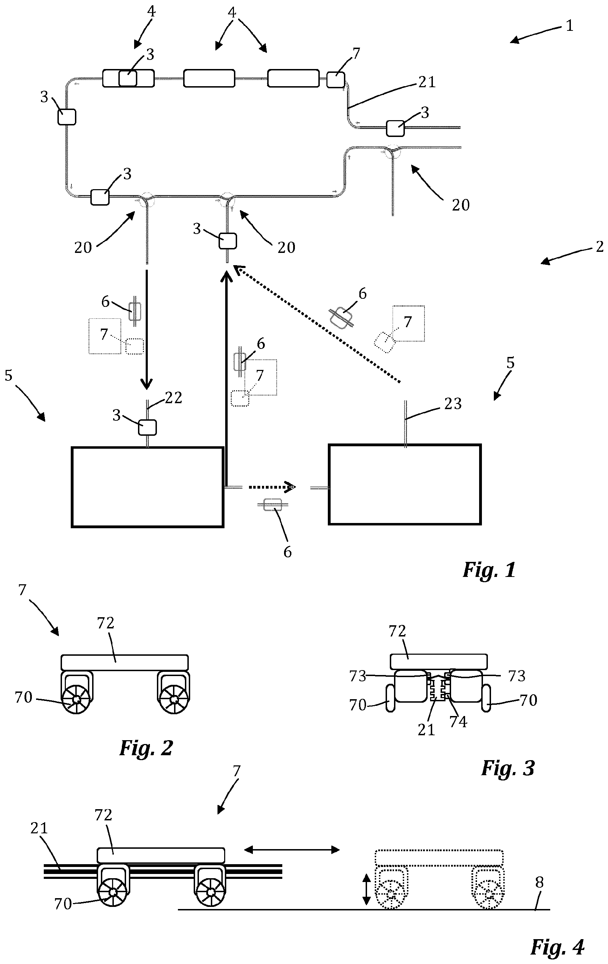

Fig. 1 zeigt schematisch ein Transportsystem 1 für einen Produktions-, Montage- und/oder Logistikprozess mit einem mehrere Verzweigungen 20 und Schienen 21, 22, 23 aufweisenden Schienennetz 2. Das Transportsystem 1 umfasst eine Vielzahl an fahrerlosen Schienenfahrzeugen 3, welche entlang der Schienen 21, 22, 23 für einen schienengebundenen Materialtransport bewegbar sind. Dabei sind entlang einer ersten Schiene 21 mehrere Stationen 4 für eine Verarbeitung eines mittels der Schienenfahrzeuge 3 transportierten Förderguts vorgesehen.

Die Schienen 21, 22, 23 und die entlang der Schienen 21, 22, 23 bewegbaren Schienenfahrzeuge 3 sind in vorteilhaften Ausgestaltungen gemäß EP 0 728 647 A1 gestaltet, wobei an den Schienenfahrzeugen 3 um vertikale Drehachsen rotierende, in Fig. 1 nicht sichtbare Laufrollen vorgesehen sind.

Zu der Strecke der ersten Schiene 21 versetzt sind weitere Stationen, Lager oder Bereiche 5 vorgesehen. Dabei handelt es sich beispielsweise um Stationen für eine Nachbearbeitung, welche bei einem regulären Prozessablauf nicht angefahren werden und/oder um Bereiche zur Durchführung sicherheitskritischer Anwendungen, an welche besondere Anforderungen gestellt sind.

Um einen automatischen oder selbsttätigen Transfer zu diesen Stationen, Lagern oder Bereichen 5 zu ermöglichen, sind bei dem Transportsystem 1 in einer Ausgestaltung zusätzliche fahrerlose Transportfahrzeug 6 vorgesehen, wobei die fahrerlosen Transportfahrzeuge 6 Bewegungselemente, insbesondere Laufrollen, für eine nicht schienengebundene Bewegung aufweisen. Zusätzlich zu den Schienenfahrzeugen 3 und den Transportfahrzeugen 6 sind in einer anderen Ausgestaltung Fahrzeuge 7 vorgesehen, welche Bewegungselemente für eine nicht schienengebundene Bewegung sowie Bewegungselemente für eine schienengebundene Bewegung aufweisen.

Fig. 2 zeigt schematisch in einer Seitenansicht ein in dem Transportsystem 1 gemäß Fig. 1 einsetzbares Fahrzeug 7, welches sowohl als fahrerloses Transportfahrzeug für einen nicht schienengebundenen Materialtransport als auch als Schienenfahrzeug in dem Transportsystem 1 gemäß Fig. 1 nutzbar ist. Fig. 3 zeigt das Fahrzeug 7 gemäß Fig. 2 in einer Vorderansicht und Fig. 4 zeigt das Fahrzeug 7 beim Umsetzen zwischen einer Schiene 21 und einem Untergrund 8.

Das Fahrzeug 7 gemäß den Fig. 2 bis 4 weist für den schienengebundenen Transport als Laufrollen 73 gestaltete Bewegungselemente auf, mittels welchen es entlang der in Fig. 3 dargestellten Schiene 21 verfahrbar ist. Die Bewegungselemente sind dabei als um vertikale Drehachsen rotierende Laufrollen 73, wie in EP 0 728 647 A1 beschrieben, gestaltet. Für eine Energieübertragung ist ein ebenfalls rollenartiger Stromabnehmer 74 vorgesehen, welcher mit einer an der Schiene 21 vorgesehenen Stromschiene zusammenwirkt.

An dem Fahrzeug 7 sind weiter als Laufrollen 70 gestaltete Bewegungselemente vorgesehen, welche ein Verfahren über den Untergrund 8 erlauben. Die Laufrollen 70 sind derart an dem Fahrzeug 7 angeordnet, dass sie in einem regulären Betrieb nicht mit der Schiene 21 interferieren. Insbesondere sind die Laufrollen 70 zu diesem Zweck beispielsweise an zwei Seitenflächen eines Gehäuses des Fahrzeugs 7 angeordnet. Für ein Verfahren des Fahrzeugs 7 mittels der Laufrollen 70 ist ein nicht dargestellter Antrieb, insbesondere ein Elektroantrieb vorgesehen. Dieser Antrieb dient in einer Ausgestaltung auch dem Antrieb der Laufrollen 70 zum Verfahren des Fahrzeugs 7 entlang der Schiene 21.

Für eine Übergabe des Fahrzeugs 7 von der Schiene 21 an den Untergrund 8 sind die Laufrollen 70 in dem dargestellten Ausführungsbeispiel bezüglich eines Gestells 72 des Fahrzeugs 7 wie schematisch in Fig. 4 durch einen Pfeil dargestellt verstellbar und können so bedarfsweise zu dem Untergrund 8 abgesetzt oder von diesem angehoben werden. Es sind jedoch auch andere Ausgestaltungen, beispielsweise mittels einer Rampe denkbar.

Alternativ oder zusätzlich zu der Verwendung der entlang der Schiene 21 und über den Untergrund 8 verfahrbaren Fahrzeuge 7 sind erfindungsgemäß für einen schienengebundenen und einen nicht schienengebundenen Transport separate Fahrzeuge 3, 6 vorgesehen.

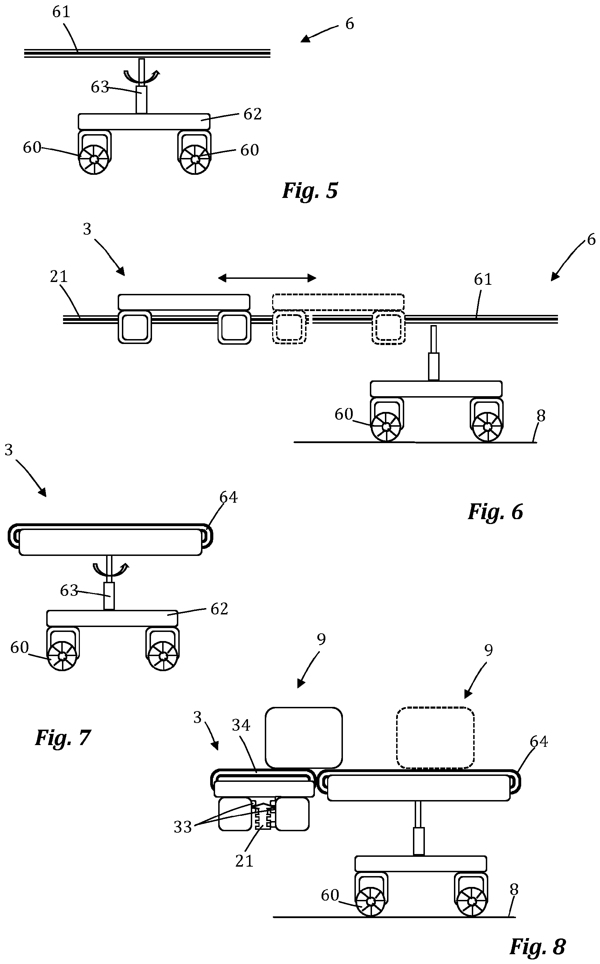

Fig. 5 zeigt ein erfindungsgemäßes fahrerloses Transportfahrzeug 6 für einen nicht schienengebundenen Materialtransport in dem Transportsystem 1 gemäß Fig. 1. Fig. 6 zeigt das fahrerlose Transportfahrzeug 6 gemäß Fig. 5 beim Umsetzen eines Schienenfahrzeugs 3 zwischen einer Schiene 21 und dem fahrerlosen Transportfahrzeug 6. Das Transportfahrzeug 6 gemäß Fig. 5 und 6 weist für den nicht schienengebundenen Transport als Laufrollen 60 gestaltete Bewegungselemente auf, welche ein Verfahren über den Untergrund 8 erlauben. Zudem ist auf oder an dem Transportfahrzeug 6 ein an die Schiene 21 des Transportsystems 1 gemäß Fig. 1 ansetzbares Schienenstück 61 vorgesehen. Ein Schienenprofil des Schienenstücks 61 entspricht zumindest im Wesentlichen dem Schienenprofil der Schiene 21 des Transportsystems 1, sodass ein entlang der Schiene 21 verfahrbares Schienenfahrzeug 3 entlang des Schienenstücks 61 verfahrbar ist. Nach einem Ansetzen des Transportfahrzeugs 6 an die Schiene 21 ist so das Schienenfahrzeug 3 von der Schiene 21 auf das Schienenstück 61 und umgekehrt überführbar. Für eine geeignete Positionierung des Schienenstücks 61 zu der Schiene 21 ist das Schienenstück 61 in vorteilhaften Ausgestaltungen relativ zu einem Gestell 62 des Transportfahrzeugs 6 beweglich. In dem dargestellten schematischen Ausführungsbeispiel ist zu diesem Zweck eine Teleskopstange 63 vorgesehen. Die Gestaltung ist jedoch lediglich beispielhaft.

Fig. 7 zeigt ein alternatives fahrerloses Transportfahrzeug 6 für einen nicht schienengebundenen Materialtransport in dem Transportsystem 1 gemäß Fig. 1. Fig. 8 zeigt das fahrerlose Transportfahrzeug 6 gemäß Fig. 7 beim Umsetzen eines mittels eines Schienenfahrzeugs 3 transportierten Förderguts 9 auf das fahrerlose Transportfahrzeug 6. Das Transportfahrzeug 6 gemäß Fig. 7 und 8 weist ebenfalls für den nicht schienengebundenen Transport als Laufrollen 60 gestaltete Bewegungselemente auf, welche ein Verfahren über den Untergrund 8 erlauben. Wie in Fig. 8 erkennbar ist, weist das Schienenfahrzeug 3 um vertikale Drehachsen rotierende Laufrollen 33 auf, mittels welchen es entlang der in Fig. 3 dargestellten Schiene 21 verfahrbar ist. Für ein Umsetzen eines Förderguts 9 zwischen dem Schienenfahrzeug 3 und dem fahrerlosen Transportfahrzeug 6 sind bei dem Ausführungsbeispiel gemäß den Fig. 6 und 7 als Förderbänder 34, 64 gestaltete Fördermittel vorgesehen. Es sind jedoch auch andere Fördermittel denkbar. In dem in Fig. 7 und 8 dargestellten schematischen Ausführungsbeispiel ist für eine vertikale Ausrichtung der Förderbänder 34, 64 an dem Transportfahrzeug 6 eine Teleskopstange 63 vorgesehen. Die Gestaltung ist jedoch lediglich beispielhaft. In dem in Fig. 7 und 8 dargestellten Ausführungsbeispiel ist ein das Förderband 64 aufnehmender Rahmen 65 des Fahrzeugs 6 gegenüber einem Gestell 62 verschwenkbar. Dabei ist vorzugsweise ein Verschwenken über einen Schwenkwinkel von mindestens 90° möglich, um das Transportfahrzeug 6 an der Schiene 21 wahlweise mit einer Förderrichtung des Förderbandes 64 wie dargestellt quer zur Längsrichtung der Schiene 21 oder parallel zur Längsrichtung der Schiene 21 anzuordnen.

## Patentansprüche

1. Transportsystem für Produktions-, Montage- und/oder Logistikprozesse umfassend mindestens eine Schiene (21, 22, 23) und mindestens ein fahrerloses schienengebundenes Schienenfahrzeug (3), welches entlang der mindestens einen Schiene (21, 22, 23) für einen Materialtransport bewegbar ist, **dadurch gekennzeichnet, dass** mindestens ein fahrerloses nicht schienengebundenes Transportfahrzeug (6) für einen nicht schienengebundenen Materialtransport vorgesehen ist, wobei das fahrerlose nicht schienengebundene Transportfahrzeug (6) Bewegungselemente für eine nicht schienengebundene Bewegung aufweist, wobei für einen schienengebundenen und einen nicht schienengebundenen Transport separate Fahrzeuge (3, 6) vorgesehen sind, wobei das mindestens eine fahrerlose nicht schienengebundene Transportfahrzeug (6) ein an die mindestens eine Schiene (21, 22, 23) ansetzbares Schienenstück (61) aufweist, und wobei das an die Schiene (21, 22, 23) ansetzbare Schienenstück (61) und die mindestens eine Schiene (21, 22, 23) ein zumindest im Wesentlichen baugleiches Schienenprofil aufweisen, sodass das mindestens eine entlang der Schiene verfahrbare schienengebundene Schienenfahrzeug (3) von der Schiene (21, 22, 23) auf das daran angesetzte Schienenstück (61) oder von dem Schienenstück (61) auf die Schiene (21, 22, 23) bewegbar ist.

2. Transportsystem nach Anspruch 1, **dadurch gekennzeichnet, dass** die Bewegungselemente des mindestens einen fahrerlosen nicht schienengebundenen Transportfahrzeugs (6) als Laufrollen (60, 70) zum Verfahren über einen Untergrund (8) gestaltet sind.

3. Transportsystem nach Anspruch 1 oder 2, **dadurch gekennzeichnet, dass** das mindestens eine fahrerlose nicht schienengebundene Transportfahrzeug (6) als Fahrantrieb einen Elektroantrieb aufweist.

4. Transportsystem nach Anspruch 1, 2 oder 3, **dadurch gekennzeichnet, dass** Überführungselemente vorgesehen sind, um ein schienengebundenes Schienenfahrzeug (3) von der Schiene (21, 22, 23) auf das fahrerlose nicht schienengebundene Transportfahrzeug (6) selbsttätig zu überführen und/oder um ein mittels eines schienengebundenen Schienenfahrzeugs (3) transportiertes Fördergut (9) von dem schienengebundenen Schienenfahrzeug (3) auf das fahrerlose nicht schienengebundene Transportfahrzeug (6) selbsttätig zu überführen.

5. Transportsystem nach einem der Ansprüche 1 bis 4, **dadurch gekennzeichnet, dass** das Schienenstück (61) bezüglich eines Gestells (62) in vertikaler Richtung verstellbar an dem fahrerlosen nicht schienengebundenenTransportfahrzeug (6) gelagert ist.

6. Verwendung eines fahrerlosen nicht schienengebundenen Transportfahrzeugs (6), das Bewegungselemente für eine nicht schienengebundene Bewegung aufweist, für einen nicht schienengebundenen Materialtransport in einem Transportsystem (1) umfassend mindestens eine Schiene (21, 22, 23), entlang welcher fahrerlose schienengebundene Schienenfahrzeuge (3) für einen Materialtransport bewegbar sind, wobei das fahrerlose nicht schienengebundene Transportfahrzeug (6) ein an die mindestens eine Schiene (21, 22, 23) ansetzbares Schienenstück (61) aufweist, und wobei das an die Schiene (21, 22, 23) ansetzbare Schienenstück (61) und die mindestens eine Schiene (21, 22, 23) ein zumindest im Wesentlichen baugleiches Schienenprofil aufweisen, sodass entlang der Schiene verfahrbare schienengebundene Schienenfahrzeuge (3) von der Schiene (21, 22, 23) auf das daran angesetzte Schienenstück (61) oder von dem Schienenstück (61) auf die Schiene (21, 22, 23) bewegbar sind.

## Claims

1. Transportation system for production, assembly, and/or logistics processes, comprising at least one rail (21, 22, 23) and at least one driverless rail-bound rail vehicle (3) which for transportation of material is movable along the at least one rail (21, 22, 23),
**characterized in that**
at least one driverless non-rail-bound transportation vehicle (6) is provided for non-rail-bound transportation of material, wherein the driverless non-rail-bound transportation vehicle (6) has mobility elements for a non-rail-bound movement, wherein for rail-bound and non-rail-bound transportation separate vehicles (3, 6) are provided, wherein the at least one driverless non-rail-bound transportation vehicle (6) has a rail piece (61) that is attachable to the at least one rail (21, 22, 23), and wherein the rail piece (61) that is attachable to the rail (21, 22, 23) and the at least one rail (21, 22, 23) have a rail profile that is at least substantially of identical construction such that the at least one rail-bound rail vehicle (3) which is displaceable along the rail is movable from the rail (21, 22, 23) onto the rail piece (61) that is attached to said rail, or from the rail piece (61) onto the rail (21, 22, 23).

2. Transportation system according to Claim 1, **characterized in that** the mobility elements of the at least one driverless non-rail-bound transportation vehicle (6) are designed as track rollers (60, 70) for displacement across a ground (8).

3. Transportation system according to Claim 1 or 2, **characterized in that** the at least one driverless non-rail-bound transportation vehicle (6) has an electric drive as a traction drive.

4. Transportation system according to Claim 1, 2 or 3, **characterized in that** transfer elements are provided in order to transfer a rail-bound rail vehicle (3) from the rail (21, 22, 23) onto the driverless non-rail-bound transportation vehicle (6) in a self-acting manner and/or in order to transfer conveyed goods (9) that are transported by means of a rail-bound rail vehicle (3) from the rail-bound rail vehicle (3) onto the driverless non-rail-bound transportation vehicle (6) in a self-acting manner.

5. Transportation system according to one of Claims 1 to 4, **characterized in that** the rail piece (61) is mounted on the driverless non-rail-bound transportation vehicle (6) so as to be adjustable in the vertical direction in relation to a frame (62).

6. Use of a driverless non-rail-bound transportation vehicle (6) which has mobility elements for a non-rail-bound movement, for non-rail-bound transportation of material in a transportation system (1), comprising at least one rail (21, 22, 23) along which driverless rail-bound rail vehicles (3) are movable for transportation of material, wherein the driverless non-rail-bound transportation vehicle (6) has a rail piece (61) that is attachable to the at least one rail (21, 22, 23), and wherein the rail piece (61) that is attachable to the rail (21, 22, 23) and the at least one rail (21, 22, 23) have a rail profile that is at least substantially of identical construction such that rail-bound rail vehicles (3) which are displaceable along the rail are movable from the rail (21, 22, 23) onto the rail piece (61) that is attached to said rail, or from the rail piece (61) onto the rail (21, 22, 23).

## Revendications

1. Système de transport pour des processus de production, de montage et/ou logistiques, comprenant au moins un rail (21, 22, 23) et au moins un véhicule ferroviaire (3) sans conducteur roulant sur rail, lequel peut être mû le long de l'au moins un rail (21, 22, 23) pour un transport de matériel, **caractérisé en ce qu'**au moins un véhicule de transport (6) sans conducteur non roulant sur rail est prévu pour un transport de matériel non roulant sur rail, le véhicule de transport (6) sans conducteur non roulant sur rail possédant des éléments de mouvement pour un mouvement non roulant sur rail, des véhicules (3, 6) séparés étant prévus pour un transport roulant sur rail et non roulant sur rail, l'au moins un véhicule de transport (6) sans conducteur non roulant sur rail possédant un morceau de rail (61) qui peut être appliqué contre l'au moins un rail (21, 22, 23) et le morceau de rail (61) qui peut être appliqué contre le rail (21, 22, 23) ainsi que l'au moins un rail (21, 22, 23) possédant un profil de rail au moins sensiblement de construction identique, de sorte que l'au moins un véhicule ferroviaire (3) roulant sur rail qui peut se déplacer le long du rail peut être mû du rail (21, 22, 23) sur le morceau de rail (61) appliqué contre celui-ci ou du morceau de rail (61) sur le rail (21, 22, 23).

2. Système de transport selon la revendication 1, **caractérisé en ce que** les éléments de mouvement de l'au moins un véhicule de transport (6) sans conducteur non roulant sur rail sont configurés sous la forme de galets de roulement (60, 70) servant au déplacement sur un sol (8).

3. Système de transport selon la revendication 1 ou 2, **caractérisé en ce que** l'au moins un véhicule de transport (6) sans conducteur non roulant sur rail possède un mécanisme propulseur électrique en tant que mécanisme propulseur de déplacement.

4. Système de transport selon la revendication 1, 2 ou 3, **caractérisé en ce que** des éléments de transfert sont présents en vue de réaliser un transfert automatique d'un véhicule ferroviaire (3) roulant sur rail depuis le rail (21, 22, 23) sur le véhicule de transport (6) sans conducteur non roulant sur rail et/ou en vue de réaliser un transfert automatique d'une marchandise convoyée (9), transportée au moyen du véhicule ferroviaire (3) roulant sur rail, depuis le véhicule ferroviaire (3) roulant sur rail sur le véhicule de transport (6) sans conducteur non roulant sur rail.

5. Système de transport selon l'une des revendications 1 à 4, **caractérisé en ce que** le morceau de rail (61) est supporté au niveau du véhicule de transport (6) sans conducteur non roulant sur rail de manière positionnable dans la direction verticale par rapport à un bâti (62).

6. Utilisation d'un véhicule de transport (6) sans conducteur non roulant sur rail, lequel possède des éléments de mouvement pour un mouvement non roulant sur rail, pour un transport de matériel non roulant sur rail dans un système de transport (1) comprenant au moins un rail (21, 22, 23) le long duquel peuvent être mus des véhicules ferroviaires (3) sans conducteur roulant sur rail pour un transport de matériel, le véhicule de transport (6) sans conducteur non roulant sur rail possédant un morceau de rail (61) qui peut être appliqué contre l'au moins un rail (21, 22, 23) et le morceau de rail (61) qui peut être appliqué contre le rail (21, 22, 23) ainsi que l'au moins un rail (21, 22, 23) possédant un profil de rail au moins sensiblement de construction identique, de sorte que les véhicules ferroviaires (3) roulant sur rail qui peuvent se déplacer le long du rail peuvent être mus du rail (21, 22, 23) sur le morceau de rail (61) appliqué contre celui-ci ou du morceau de rail (61) sur le rail (21, 22, 23).
